# FASCICULE DE BREVET EUROPEEN

(11) **EP 3 746 687 B1**
(45) Date de publication et mention de la délivrance du brevet: **02.03.2022**
(21) Numéro de dépôt: 19710015.9
(22) Date de dépôt: 24.01.2019
(51) Int. Cl.: F16L 1/16, F16L 1/18, F16L 9/18, F16L 11/20, F16L 39/00, F16L 1/19, F16L 59/20, F16L 13/02, E21B 17/18

(54) **PROCÉDÉ D'ASSEMBLAGE D'ÉLÉMENTS DE CONDUITE À DOUBLE ENVELOPPE POUR LE TRANSPORT DE FLUIDES**
VERFAHREN FÜR DEN ZUSAMMENBAU VON ROHRELEMENTEN FÜR ROHRLEITUNGEN ZUM TRANSPORT VON FLUIDEN
METHOD FOR ASSEMBLING PIPE-IN-PIPE PIPELINE ELEMENTS FOR TRANSPORTING FLUIDS

(30) Priorité: 01.02.2018 FR 1850856
(43) Date de publication de la demande: 09.12.2020
(73) Titulaire: SAIPEM S.A., 78180 Montigny Le Bretonneux (FR)
(72) Inventeur: HALLOT, Raymond, 78960 VOISINS LE BRETONNEUX (FR); COCAULT-DUVERGER, Vincent, 78580 HERBEVILLE (FR)
(74) Mandataire: Cabinet Beau de Loménie
(86) Numéro de dépôt international: PCT/FR2019/050158
(87) Numéro de publication internationale: WO 2019/150022

(56) Documents cités:
- WO-A1-02/12773
- WO-A1-2011/007075
- FR-A1- 3 032 511

## Description

### Arrière-plan de l'invention

La présente invention se rapporte au domaine général de la construction en mer de conduites sous-marines reposant au fond ou assurant la liaison fond-surface pour le transfert d'hydrocarbures, par exemple de pétrole et de gaz, issus de puits de production sous-marins.

Elle concerne plus précisément les conduites sous-marines à double enveloppe de type « Pipe In Pipe » ou PIP, c'est-à-dire « conduite dans une conduite », dans laquelle une enveloppe interne transporte les fluides et une enveloppe externe coaxiale à l'enveloppe interne est en contact avec le milieu ambiant, c'est-à-dire avec l'eau de mer.

L'espace annulaire entre les deux enveloppes peut être rempli d'un matériau isolant ou encore être vidé de tout gaz de façon à assurer une isolation thermique pour les fluides circulant dans le conduit interne. De telles conduites coaxiales sous-marines sont particulièrement utilisées dans le cadre d'installations par grandes profondeurs où la température de l'eau est typiquement de 4°C, ou pour de longs raccordements.

Généralement, les conduites sous-marines à double enveloppe sont assemblées à terre en une pluralité de sections de conduite appelées « rames », chaque section de conduite étant réalisée à partir d'un ou plusieurs éléments unitaires de conduite, de l'ordre de 10 à 1000m selon la capacité de tenue en charge du système de pose. Ces sections de conduite sont alors transportées en mer sur un navire où elles sont raccordées les unes aux autres au fur et à mesure de leur pose en mer (par un procédé dit en J, en S, en déroulé ou en sections flottées).

Les techniques de pose nécessitent de raccorder chaque nouvelle section de conduite à la conduite déjà installée en mer avant de descendre cette nouvelle section de conduite dans la mer en déplaçant le navire de pose vers l'avant. Cette étape de raccordement s'effectue typiquement en soudant bout à bout les extrémités libres en acier des enveloppes internes et externes respectives de la nouvelle section de conduite et de la conduite déjà installée en mer.

Par ailleurs, lorsque la conduite installée au fond de la mer est en service et que la température du fluide qu'elle transporte atteint des températures modérées à hautes (de l'ordre de 50 à 150°C), l'augmentation de température provoque une dilatation de l'enveloppe interne des différentes sections de la conduite par rapport à leur enveloppe externe plus froide (car isolée et en contact avec l'eau de mer à une température basse de l'ordre de 3 à 5°C). Cette dilatation de l'enveloppe interne des sections de conduite se traduit par une compression de l'enveloppe interne, cette dernière étant en effet bloquée à chaque extrémité de la conduite sous-marine par les éléments de fermeture de l'espace annulaire entre les deux enveloppes.

Lors de la pose, les enveloppes internes des différentes sections de conduite se compriment sous leur poids propre. Ce poids se transmet à la conduite externe à leur raccordement et s'équilibre par une contrainte de traction dans la conduite externe. La partie basse de la conduite étant aussi sujette à mouvement fléchissant, il peut en résulter un effort combiné trop important si les raccordements mécaniques entre les deux conduites sont trop distants. De plus, une précontrainte de compression est capturée lors de la construction. Combinés à la montée en température en phase de service, ces efforts peuvent entraîner le flambement de la conduite sur le fond marin, et si ce flambement est trop sévère, l'ouvrage peut s'en trouver ruiné. En effet, lorsqu'elle repose au fond de la mer, la conduite est restreinte dans ses déplacements par son environnement. Sous l'effet conjugué de la pression et de la température à l'intérieur de l'enveloppe interne, il résulte de ces déplacements un risque de dommage de la conduite.

Afin de limiter ces effets, il est connu de positionner des pièces intermédiaires d'ancrage en acier forgé (dénommées « intermediate blukheads » en anglais) entre l'enveloppe interne et l'enveloppe externe de la conduite. Ces pièces intermédiaires d'ancrage permettent notamment de transférer les contraintes mécaniques subies par l'enveloppe interne lors de la pose de la conduite vers l'enveloppe externe. Elles sont généralement positionnées tous les kilomètres le long de la conduite, mais cet intervalle peut être augmenté ou diminué en fonction des conditions particulières de la pose, des propriétés de la conduite et de la profondeur d'eau.

Le recours à des pièces intermédiaires d'ancrage nécessite non seulement de disposer de telles pièces en acier forgé, mais également de les incorporer à la conduite lors de la pose de celle-ci depuis le navire. L'incorporation de ces pièces requiert la soudure de deux demi-coquilles sur l'enveloppe externe de la conduite pour rabouter l'enveloppe externe succédant à l'ancrage des pièces intermédiaires. Or, cette soudure est lente à réaliser et présente une composante longitudinale qui est difficile à garantir avec un niveau de qualité adéquat.

Pour éviter le recours à des pièces intermédiaires d'ancrage, on connait du document FR 3,032,511 un dispositif d'anti-glissement et d'auto-centrage qui est positionné entre l'enveloppe interne et l'enveloppe externe de la conduite lors de sa pose. Ce dispositif, qui se présente sous la forme d'un anneau en élastomère pris en sandwich entre deux plaques métalliques que l'on serre pour comprimer l'anneau, permet d'assurer un maintien et la concentricité de l'enveloppe interne à l'intérieur de l'enveloppe externe. Toutefois, les contraintes mécaniques reprises par ce dispositif sont limitées, de l'ordre de 2 à 5 tonnes-force.

On connaît également du document WO 2011/007075 le recours à des pièces intermédiaires d'ancrage dont l'incorporation dans la conduite ne nécessite pas la soudure de demi-coquilles. Ces pièces d'ancrage constituent néanmoins un pont thermique froid depuis l'enveloppe externe vers l'enveloppe interne de la conduite qui est préjudiciable.

Le document WO 02/12773 montre un procédé d'assemblage d'éléments de conduite à double enveloppe pour le transport de fluides.

### Objet et résumé de l'invention

La présente invention a donc pour but principal de pallier de tels inconvénients en proposant un procédé d'assemblage permettant de s'affranchir des pièces intermédiaire d'ancrage et des demi-coquilles tout en limitant sensiblement le pont thermique entre l'enveloppe externe et l'enveloppe interne de la conduite.

Conformément à l'invention, ce but est atteint grâce à un procédé d'assemblage d'éléments de conduite à double enveloppe pour le transport de fluides, chaque élément de conduite comprenant une enveloppe interne destinée à recevoir les fluides à transporter et comprenant à une extrémité un renflement au niveau d'une face externe, et une enveloppe externe destinée à être positionnée autour de l'enveloppe interne en lui étant coaxiale et comprenant à une extrémité un renfoncement au niveau d'une face interne, le procédé comprenant les étapes successives :
la mise en place du premier élément de conduite en intercalant au niveau d'une extrémité libre de celle-ci une première cale annulaire de blocage venant axialement en butée entre le renflement de son enveloppe interne et une extrémité correspondante de son enveloppe externe ;
l'assemblage bout à bout de l'enveloppe interne d'un nouvel élément de conduite sur l'enveloppe interne du premier élément de conduite au niveau de l'extrémité libre de celui-ci ;
l'accostage de l'enveloppe externe du nouvel élément de conduite sur l'enveloppe externe du premier élément de conduite en la faisant coulisser le long de son enveloppe interne ; et
l'assemblage bout à bout de l'enveloppe externe du nouvel élément de conduite sur l'enveloppe externe du premier élément de conduite en intercalant au préalable une seconde cale annulaire de blocage venant en butée axiale contre le renflement de l'enveloppe interne du premier élément de conduite au niveau de son extrémité libre et le renfoncement de l'enveloppe externe du nouvel élément de conduite au niveau d'une extrémité correspondante de celle-ci.

Le procédé selon l'invention prévoit de recourir à un renflement au niveau de l'enveloppe interne et à un renfoncement au niveau de l'enveloppe externe de chaque nouvel élément de conduite à assembler de façon à créer une double butée mécanique lorsque les deux enveloppes glissent l'une sur l'autre au cours de la pose. En particulier, grâce à la présence de deux cales de blocage et des renflements et renfoncements, les enveloppes externe et interne sont bloquées longitudinalement l'une par rapport à l'autre dans les deux directions. Cette double butée mécanique permet de s'affranchir du recours à des pièces intermédiaires d'ancrage en acier forgé.

De plus, cette double butée mécanique permet de transmettre les efforts axiaux entre les deux enveloppes de l'élément de conduite pendant la pose, notamment pendant une pose en J. Par le même mécanisme, cette double butée mécanique permet de limiter, voire d'inverser la précontrainte de compression induite dans l'enveloppe interne de la conduite par l'opération de pose. En outre, cette double butée mécanique permet de transmettre les efforts axiaux entre les deux enveloppes de la conduite lors de sa mise en service. Enfin, les cales de blocage utilisées dans le procédé selon l'invention sont de préférence réalisées en polymère, ce qui limite très sensiblement le pont thermique créé entre l'enveloppe externe et l'enveloppe interne de la conduite.

Le procédé peut comprendre en outre, préalablement à la mise en place de la conduite, la construction de la conduite dans une station de soudage.

Dans ce cas, la construction de la conduite peut comprendre les étapes successives : le maintien d'un élément de conduite dans la tour de pose, le positionnement d'une bague de séparation au niveau de l'extrémité libre de l'enveloppe externe de l'élément de conduite, l'accostage et l'activation d'un dispositif de mise en tension sur l'élément de conduite afin d'étirer l'enveloppe interne de l'élément de conduite d'une longueur prédéterminée, le positionnement de la première cale annulaire de blocage, le transfert de la charge du dispositif de mise en tension sur la première cale de blocage et sur la bague de séparation, et le retrait de mise en tension.

De préférence, le renfoncement de l'enveloppe externe du nouvel élément de conduite s'étend longitudinalement sur une distance suffisante pour recouvrir la première et la seconde cale de blocage.

De préférence également, la seconde cale de blocage s'étend longitudinalement sur une longueur supérieure à celle de la première cale de blocage afin de faciliter les opérations de réparation de la soudure.

Un joint annulaire d'étanchéité peut être positionné autour de l'enveloppe interne du nouvel élément de conduite en venant en butée contre la seconde cale de blocage ou contre une butée mécanique aménagée sur l'enveloppe interne afin de limiter les infiltrations d'eau accidentelles au sein de l'espace annulaire entre les enveloppes interne et externe de la conduite.

De préférence encore, les première et seconde cales de blocage sont segmentées et sont réalisées en polymère.

L'assemblage bout à bout de l'enveloppe interne d'un nouvel élément de conduite sur l'enveloppe interne de la conduite au niveau de l'extrémité libre de celle-ci peut être réalisé par dépôt d'un cordon de soudure. De plus, l'accostage de l'enveloppe externe du nouvel élément de conduite sur l'enveloppe externe de la conduite peut être réalisé au moyen d'un outillage de centrage.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- les figures 1A à 1K illustrent différentes étapes du procédé d'assemblage d'éléments de conduite à double enveloppe selon l'invention ; et
- la figure 2 est une vue en coupe et partielle d'un détail de la figure 1K.

### Description détaillée de l'invention

L'invention s'applique à la pose (ou construction en mer) d'une conduite sous-marine à double enveloppe de type « Pipe in Pipe » (ou « PIP »), c'est-à-dire une conduite qui comprend une enveloppe interne destinée à transporter des hydrocarbures issus de puits de production et une enveloppe externe disposée autour de l'enveloppe interne en lui étant coaxiale et destinée à être en contact direct avec l'eau de mer environnante.

Ce type de conduite sous-marine est typiquement utilisé dans la production offshore d'hydrocarbures par grande profondeur. Dans le cadre de telles installations, les conduites à double enveloppe peuvent être assemblées à terre en plusieurs sections de conduite, chaque section de conduite étant formée à partir d'un ou plusieurs éléments de longueur unitaire (on parle également de « rames »), de l'ordre de 10 à 100 m selon la capacité de tenue du système de pose.

Lors de la pose (en J ou en S), les sections de conduite sont raccordées les unes aux autres à bord du navire et au fur et à mesure de leur installation en mer. Plus précisément, avec la pose en J, la conduite sous-marine est typiquement descendue du navire de pose pratiquement verticale (entre +30° et -10° par rapport à la verticale). Cette inclinaison quasi-verticale de la conduite diminue au fur et à mesure de son déplacement vers le bas jusqu'à épouser la pente du fond de la mer. Avec la pose en S, la conduite sous-marine est typiquement descendue du navire de pose pratiquement à l'horizontale et se courbe ensuite pour atteindre le fond marin. Bien entendu, l'invention s'applique également à la construction d'une conduite à double enveloppe par un procédé en déroulé.

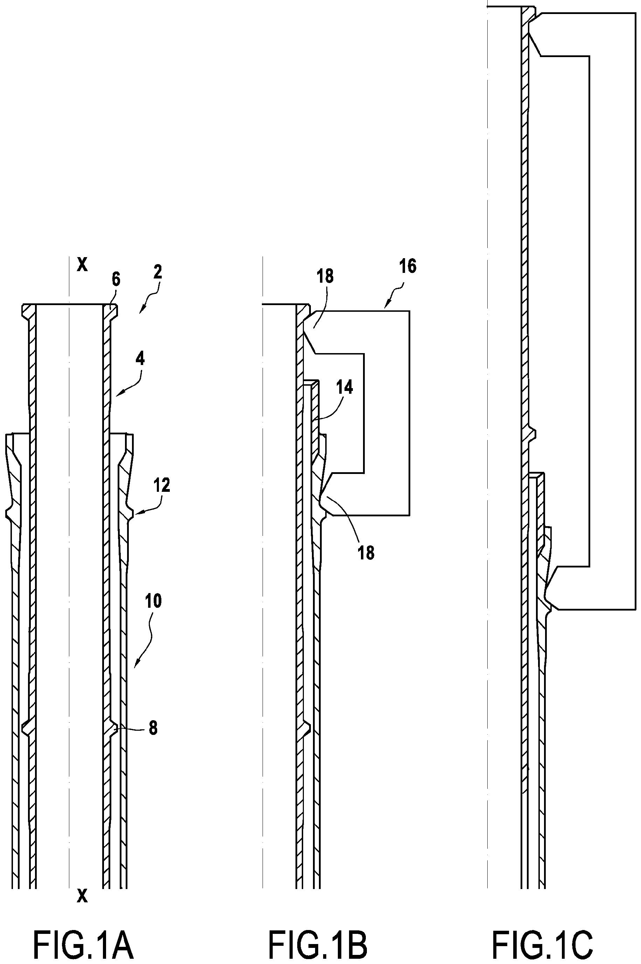

Les figures 1A à 1K illustrent les différentes étapes sur un navire de pose en J d'une conduite à double enveloppe selon un mode de réalisation du procédé d'assemblage selon l'invention.

Sur la figure 1A, est représenté en position verticale, un élément de conduite 2 centré sur un axe longitudinal X-X et destiné à former la conduite à double enveloppe selon l'invention.

Cet élément de conduite 2 comprend une enveloppe interne 4 qui est destinée à recevoir les fluides à transporter, cette enveloppe interne 4 comprenant, à une extrémité libre un épaulement de tensionnement 6 faisant saillie radialement au niveau d'une face externe, et un renflement 8 décalé longitudinalement par rapport à son extrémité libre.

L'élément de conduite 2 comprend également une enveloppe externe 10 qui est destinée à être positionnée autour de l'enveloppe interne en lui étant coaxiale, cette enveloppe externe 10 comprenant notamment un épaulement de tensionnement 12 faisant saillie radialement au niveau d'une face externe.

L'élément de conduite 2 est maintenu verticalement dans la station de soudage d'une tour de pose en J. Une bague de séparation 14 peut ensuite être installée au niveau de l'extrémité libre de l'enveloppe externe 10 de l'élément de conduite. Outre la fonction de transmission d'effort axial, cette bague de séparation 14 sert de latte de soudage lors de la soudure bout à bout de l'enveloppe externe décrite ci-après. Il est également possible d'imaginer que la bague de séparation soit intégrée directement au corps de l'enveloppe interne de l'élément de conduite.

Comme représenté sur la figure 1B, une pluralité de vérins hydrauliques 16 (par exemple au nombre de six) d'un dispositif de mise en tension sont déployés autour de l'élément de conduite. Ces vérins présentent des mâchoires 18 qui viennent s'accoster, d'une part sur l'épaulement de tensionnement 6 de l'enveloppe interne, et d'autre part sur l'épaulement de tensionnement 12 de l'enveloppe externe.

Les vérins 16 du dispositif de mise en tension sont alors déployés afin d'étirer l'enveloppe interne 4 de l'élément de conduite d'une longueur prédéterminée (figure 1C). La course des vérins est ainsi déterminée en fonction de la longueur des enveloppes de l'élément de conduite. Typiquement, cette course est de l'ordre du mètre.

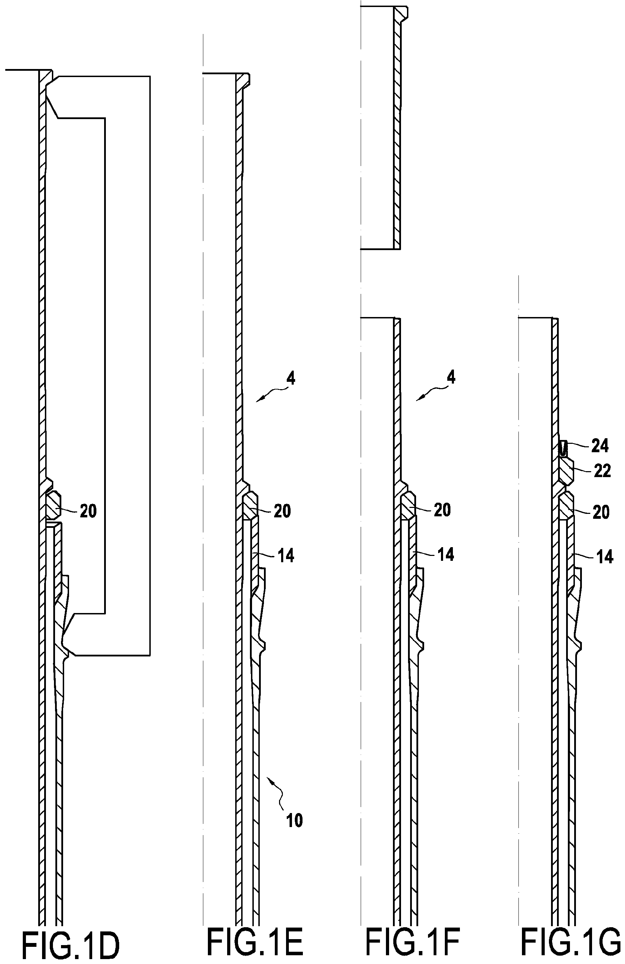

Au cours de l'étape suivante (figure 1D), une première cale annulaire de blocage 20 est positionnée en venant axialement en butée entre le renflement 8 de l'enveloppe interne et une extrémité correspondante de l'enveloppe externe. Afin de réaliser cette opération sans nécessiter d'outillage spécifique, la première cale annulaire de blocage est segmentée.

La charge des vérins 16 du dispositif de mise en tension peut alors être transférée : les vérins sont rétractés et après une légère course vers le bas (de l'ordre de quelques centimètres), la charge est transférée sur la première cale de blocage 20 et sur la bague de séparation 14. Le dispositif de mise en tension 16 est ensuite retiré (figure 1E).

On notera que la mise en tension de l'élément de conduite tel que décrit précédemment a pour avantage de limiter, voire de supprimer les ouvrages annexes généralement requis pour contrôler le flambement de la conduite ou de gestion des portées libres et des déplacements longitudinaux accumulés, souvent nommés « pipe walking ».

Selon une étape optionnelle, il est ensuite possible d'installer un joint annulaire d'étanchéité autour de l'enveloppe interne de l'élément de conduite pour garantir l'étanchéité de l'espace annulaire entre les enveloppes interne et externe. A cet effet, cette étape consiste à découper une portion 4a de l'enveloppe interne 4 de l'élément de conduite pour en retirer l'épaulement de tensionnement 6, puis à chanfreiner l'extrémité de cette enveloppe interne pour effectuer une opération de soudage (figure 1F). On notera que lorsqu'un joint en élastomère peut être utilisé, il n'est pas utile de découper l'enveloppe interne car l'élasticité de ce type de joint permet de le passer par-dessus le renflement 6.

Comme représenté sur la figure 1G, une seconde cale annulaire de blocage 22 est alors insérée pour venir en butée axiale contre le renflement 8 de l'enveloppe interne de la conduite au niveau de son extrémité libre et l'extrémité de l'enveloppe externe 10.

Un joint annulaire d'étanchéité 24 peut alors être coulissé autour de l'enveloppe interne 4 de l'élément de conduite, par exemple en utilisant un outil spécifique, pour venir en butée contre la seconde cale de blocage 22.

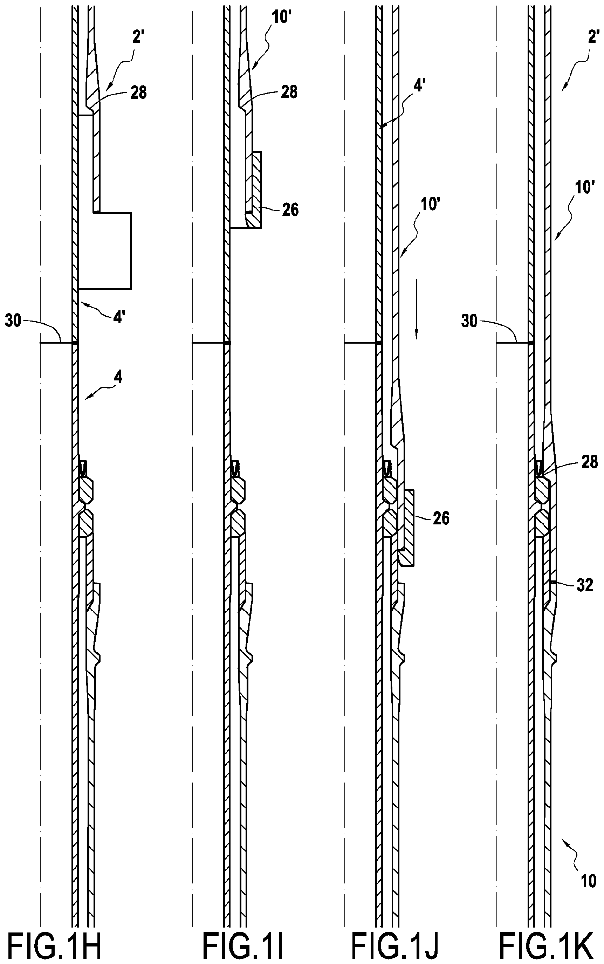

Au cours de l'étape suivante illustrée par la figure 1H, on vient assembler bout à bout l'enveloppe interne 4' d'un nouvel élément de conduite 2' sur l'enveloppe interne 4 de la conduite 2 ainsi construite au niveau de l'extrémité libre de celle-ci. Cet assemblage est réalisé en déposant un cordon de soudure 30 entre ces deux enveloppes internes.

Un outillage de centrage 26 constitué de deux demi-coquilles est ensuite installé autour de l'extrémité inférieure de l'enveloppe externe 10' du nouvel élément de conduite 2', cette extrémité inférieure étant munie d'un renfoncement 28 au niveau de sa face interne (figure 1I).

L'étape suivante consiste à réaliser un accostage de l'enveloppe externe 10' du nouvel élément de conduite 2' sur l'enveloppe externe 10 de la conduite 2 en la faisant coulisser le long de son enveloppe interne 4' (figure 1J).

L'outillage de centrage est récupéré, puis on réalise une mise à joint et le dépôt d'un cordon de soudure 32 entre les extrémités respectives de l'enveloppe externe 10' du nouvel élément de conduite 2' et de l'enveloppe externe 10 de la conduite 2 (figure 1K).

On notera que la bague de séparation 14 sert de latte de soudage lors de la soudure bout à bout de l'enveloppe externe 10' du nouvel élément de conduite 2' sur l'enveloppe externe 10 de la conduite 2.

Les étapes précédentes sont réitérées autant de fois que nécessaire pour obtenir la longueur voulue de la conduite puis cette dernière est descendue en mer.

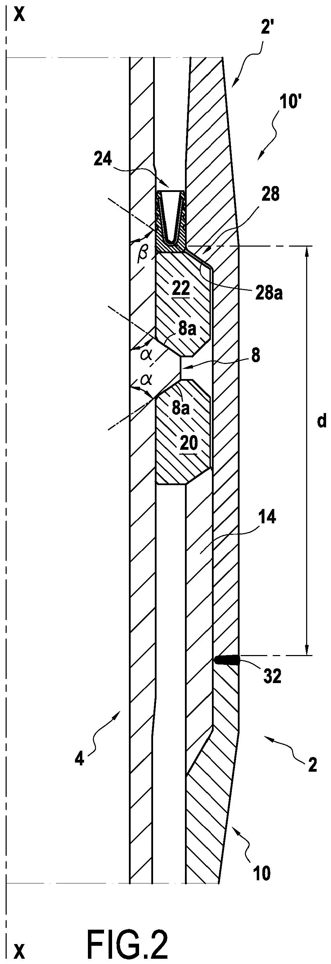

En liaison avec la figure 2, on décrira maintenant de façon plus précise l'assemblage entre les extrémités respectives de l'enveloppe externe 10' du nouvel élément de conduite 2' et de l'enveloppe externe 10 de la conduite 2.

Sur cette figure 2, le renflement 8 de l'enveloppe interne 4 de la conduite présente deux flancs latéraux 8a formant chacun un angle α de l'ordre de 60° avec l'axe longitudinal de l'enveloppe interne.

De même, le renfoncement 28 de l'enveloppe externe 10' de l'élément de conduite 2' présente un flanc latéral 28a formant un angle β de l'ordre de 60° avec l'axe longitudinal de l'enveloppe externe.

La première et la seconde cale de blocage 20, 22 se présente sous la forme de segments de cale qui ont une section droite en forme de polygone (ici un heptagone) avec des flancs latéraux venant en contact avec les flancs latéraux respectifs du renflement 8 de l'enveloppe interne de la conduite et du renfoncement 28 de l'enveloppe externe de l'élément de conduite.

On notera que le renfoncement 28 de l'enveloppe externe 10' s'étend de préférence longitudinalement sur une distance d suffisante pour recouvrir la première et la seconde cale de blocage 20, 22. Ainsi, le soudage bout à bout de l'enveloppe externe 10' du nouvel élément de conduite 2' sur l'enveloppe externe 10 de la conduite 2 peut être réalisé au niveau de la bague de séparation 14 sans endommager les première et seconde cales de blocage 20, 22.

On notera également que la seconde cale de blocage 22 peut s'étendre longitudinalement sur une longueur qui est supérieure à celle sur laquelle s'étend la première cale de blocage 20. Cette disposition permet de faciliter les opérations de réparation de la soudure. En effet, si le cordon de soudure 32 devait être gougé sur une longueur typique d'environ 20 mm, la procédure décrite par les figures 1I à 1K peut être effectuée à l'envers, à savoir :
- l'enveloppe externe 10' est retirée ;
- l'extrémité de l'enveloppe externe est pourvue d'un chanfrein ;
- la seconde cale annulaire de blocage 22 est remplacée par une cale annulaire de hauteur réduite de la longueur gougée ;
- le joint annulaire d'étanchéité est coulissé pour venir en butée sur cette cale annulaire ; et
- il est procédé à la mise à joint et au soudage des deux enveloppes 10 et 10'.

## Revendications

1. Procédé d'assemblage d'éléments de conduite à double enveloppe pour le transport de fluides, chaque élément de conduite (2, 2') comprenant une enveloppe interne (4, 4') destinée à recevoir les fluides à transporter et comprenant à une extrémité un renflement (8) au niveau d'une face externe, et une enveloppe externe (10, 10') destinée à être positionnée autour de l'enveloppe interne en lui étant coaxiale et comprenant à une extrémité un renfoncement (28) au niveau d'une face interne, le procédé comprenant les étapes successives :
la mise en place du premier élément de conduite (2) en intercalant au niveau d'une extrémité libre de celle-ci une première cale annulaire de blocage (20) venant axialement en butée entre le renflement (8) de son enveloppe interne (4) et une extrémité correspondante de son enveloppe externe (10) ;
l'assemblage bout à bout de l'enveloppe interne (4') d'un nouvel élément de conduite (2') sur l'enveloppe interne (4) du premier élément de conduite (2) au niveau de l'extrémité libre de celui-ci ;
l'accostage de l'enveloppe externe (10') du nouvel élément de conduite (2') sur l'enveloppe externe (10) du premier élément de conduite (2) en la faisant coulisser le long de son enveloppe interne (4') ; et
l'assemblage bout à bout de l'enveloppe externe (10') du nouvel élément de conduite sur l'enveloppe externe (10) du premier élément de conduite en intercalant au préalable une seconde cale annulaire de blocage (22) venant en butée axiale contre le renflement (8) de l'enveloppe interne (4) du premier élément de conduite au niveau de son extrémité libre et le renfoncement (28) de l'enveloppe externe (10') du nouvel élément de conduite au niveau d'une extrémité correspondante de celle-ci.

2. Procédé selon la revendication 1, comprenant en outre, préalablement à la mise en place de la conduite, la construction de la conduite dans une station de soudage.

3. Procédé selon la revendication 2, dans lequel la construction de la conduite comprend les étapes successives :
le maintien d'un élément de conduite (2) dans la tour de pose ;
le positionnement d'une bague de séparation (14) au niveau de l'extrémité libre de l'enveloppe externe (8) de l'élément de conduite ;
l'accostage et l'activation d'un dispositif de mise en tension sur l'élément de conduite afin d'étirer l'enveloppe interne (4) de l'élément de conduite d'une longueur prédéterminée ;
le positionnement de la première cale annulaire de blocage (20) ;
le transfert de la charge du dispositif de mise en tension sur la première cale de blocage (20) et sur la bague de séparation (14) ; et
le retrait du dispositif de mise en tension.

4. Procédé selon l'une quelconque des revendications 1 à 3, dans lequel le renfoncement (28) de l'enveloppe externe (10) du nouvel élément de conduite s'étend longitudinalement sur une distance (d) suffisante pour recouvrir la première et la seconde cale de blocage.

5. Procédé selon l'une quelconque des revendications 1 à 4, dans lequel la seconde cale de blocage (22) s'étend longitudinalement sur une longueur supérieure à celle de la première cale de blocage (20).

6. Procédé selon l'une quelconque des revendications 1 à 3, dans lequel un joint annulaire d'étanchéité (24) est positionné autour de l'enveloppe interne (4) du nouvel élément de conduite en venant en butée contre la seconde cale de blocage ou contre une butée mécanique aménagée sur l'enveloppe interne.

7. Procédé selon l'une quelconque des revendications 1 à 3, dans lequel les première et seconde cales de blocage (20, 22) sont segmentées.

8. Procédé selon l'une quelconque des revendications 1 à 7, dans lequel l'assemblage bout à bout de l'enveloppe interne d'un nouvel élément de conduite sur l'enveloppe interne de la conduite au niveau de l'extrémité libre de celle-ci est réalisé par dépôt d'un cordon de soudure (30).

9. Procédé selon l'une quelconque des revendications 1 à 8, dans lequel la première et la seconde cale de blocage sont réalisées en polymère.

10. Procédé selon l'une quelconque des revendications 1 à 9, dans lequel l'accostage de l'enveloppe externe (10') du nouvel élément de conduite sur l'enveloppe externe (10) de la conduite est réalisé au moyen d'un outillage de centrage (26).

## Patentansprüche

1. Verfahren für den Zusammenbau von Leitungselementen mit doppelter Hülle für den Transport von Fluiden, wobei jedes Leitungselement (2, 2') eine innere Hülle (4, 4'), die dazu bestimmt ist, die zu transportierenden Fluide aufzunehmen, und an einem Ende im Bereich einer äußeren Seite eine Ausbauchung (8) umfasst, und eine äußere Hülle (10, 10') umfasst, die dazu bestimmt ist, um die innere Hülle herum positioniert zu werden, indem sie koaxial dazu ist, und an einem Ende eine Verstärkung (28) im Bereich einer inneren Seite umfasst, wobei das Verfahren die aufeinanderfolgenden Schritte umfasst:
Platzieren des ersten Leitungselements (2), indem im Bereich eines freien Endes davon ein erstes ringförmiges Blockierungsfutter (20) eingeschoben wird, das axial zwischen der Ausbauchung (8) seiner inneren Hülle (4) und einem entsprechenden Ende seiner äußeren Hülle (10) axial in Anschlag gelangt,
stumpfes Verbinden der inneren Hülle (4') eines neuen Leitungselements (2') an der inneren Hülle (4) des ersten Leitungselements (2) im Bereich des freien Endes davon,
Anlegen der äußeren Hülle (10') des neuen Leitungselements (2') an der äußeren Hülle (10) des ersten Leitungselements (2), indem es entlang seiner inneren Hülle (4') verschoben wird, und
stumpfes Verbinden der äußeren Hülle (10') des neuen Leitungselements an der äußeren Hülle (10) des ersten Leitungselements, indem im Voraus ein zweites ringförmiges Blockierungsfutter (22) eingeschoben wird, das gegen die Ausbauchung (8) der inneren Hülle (4) des ersten Leitungselements im Bereich seines freien Endes und die Verstärkung (28) der äußeren Hülle (10') des neuen Leitungselements im Bereich eines entsprechenden Endes davon axial in Anschlag gelangt.

2. Verfahren nach Anspruch 1, das ferner vor dem Platzieren der Leitung die Montage der Leitung in einer Schweißstation umfasst.

3. Verfahren nach Anspruch 2, wobei die Montage der Leitung die aufeinanderfolgenden Schritte umfasst:
Halten des Leitungselements (2) in dem Verlegungsturm,
Positionieren eines Trennrings (14) im Bereich des freien Endes der äußeren Hülle (8) des Leitungselements,
Anlegen und Aktivieren einer Spannvorrichtung an dem Leitungselement, um die innere Hülle (4) des Leitungselements um eine vorbestimmte Länge zu strecken,
Positionieren des ersten ringförmigen Blockierungsfutters (20),
Übertragen der Last der Spannvorrichtung auf das erste Blockierungsfutter (20) und auf den Trennring (14), und
Einziehen der Spannvorrichtung.

4. Verfahren nach einem der Ansprüche 1 bis 3, wobei die Verstärkung (28) der äußeren Hülle (10) des neuen Leitungselements sich in Längsrichtung über eine Distanz (d) erstreckt, die ausreicht, um das erste und das zweite Blockierungsfutter zu bedecken.

5. Verfahren nach einem der Ansprüche 1 bis 4, wobei das zweite Blockierungsfutter (22) sich in Längsrichtung über eine Länge erstreckt, die größer als diejenige des ersten Blockierungsfutters (20) ist.

6. Verfahren nach einem der Ansprüche 1 bis 3, wobei ein ringförmiger Dichtungsring (24) um die innere Hülle (4) des neuen Leitungselements herum positioniert wird, indem es gegen das zweite Blockierungsfutter oder gegen einen mechanischen Anschlag, der an der inneren Hülle eingerichtet ist, in Anschlag gelangt.

7. Verfahren nach einem der Ansprüche 1 bis 3, wobei das erste und das zweite Blockierungsfutter (20, 22) segmentiert sind.

8. Verfahren nach einem der Ansprüche 1 bis 7, wobei das stumpfe Verbinden der inneren Hülle eines neuen Leitungselements an der inneren Hülle der Leitung im Bereich des freien Endes davon durch Aufbringen einer Schweißnaht (30) ausgeführt wird.

9. Verfahren nach einem der Ansprüche 1 bis 8, wobei das erste und das zweite Blockierungsfutter aus Polymer hergestellt werden.

10. Verfahren nach einem der Ansprüche 1 bis 9, wobei das Anlegen der äußeren Hülle (10') des neuen Leitungselements an der äußeren Hülle (10) der Leitung mittels eines Zentrierungswerkzeugs (26) ausgeführt wird.

## Claims

1. A method for assembling pipe-in-pipe pipeline elements for transporting fluids, each pipeline element (2, 2') comprising an inner pipe (4, 4') intended to receive the fluids to be transported and comprising at one end a bulge (8) at an outer face, and an outer pipe (10, 10') intended to be positioned around the inner pipe while being coaxial therewith and comprising at one end a recess (28) at an inner face, the method comprising the successive steps:
placing the first pipeline element (2) by inserting at a free end thereof a first annular locking wedge (20) axially abutting between the bulge (8) of its inner pipe (4) and a corresponding end of its outer pipe (10);
butt-assembling the inner pipe (4') of a new pipeline element (2') on the inner pipe (4) of the first pipeline element (2) at the free end thereof;
positioning the outer pipe (10') of the new pipeline element (2') alongside the outer pipe (10) of the first pipeline element (2) by sliding it along its inner pipe (4'); and
butt-assembling the outer pipe (10') of the new pipeline element on the outer pipe (10) of the first pipeline element by inserting beforehand a second annular locking wedge (22) axially abutting against the bulge (8) of the inner pipe (4) of the first pipeline element at its free end and the recess (28) of the outer pipe (10') of the new pipeline element at a corresponding end thereof.

2. The method according to claim 1, further comprising, before placing the pipeline, the construction of the pipeline in a welding station.

3. The method according to claim 2, wherein the construction of the pipeline comprises the successive steps:
maintaining a pipeline element (2) in the laying tower;
positioning a separating ring (14) at the free end of the outer pipe (8) of the pipeline element;
positioning and activating a tensioning device alongside the pipeline element in order to stretch the inner pipe (4) of the pipeline element by a predetermined length;
positioning the first annular locking wedge (20);
transferring the load of the tensioning device to the first locking wedge (20) and to the separating ring (14); and
withdrawing the tensioning device.

4. The method according to any one of claims 1 to 3, wherein the recess (28) of the outer pipe (10) of the new pipeline element extends longitudinally over a distance (d) sufficient to cover the first and second locking wedges.

5. The method according to any one of claims 1 to 4, wherein the second locking wedge (22) extends longitudinally over a length greater than that of the first locking wedge (20).

6. The method according to any one of claims 1 to 3, wherein an annular seal (24) is positioned around the inner pipe (4) of the new pipeline element abutting against the second locking wedge or against a mechanical stop arranged on the inner pipe.

7. The method according to any one of claims 1 to 3, wherein the first and second locking wedges (20, 22) are segmented.

8. The method according to any one of claims 1 to 7, wherein the butt-assembly of the inner pipe of a new pipeline element on the inner pipe of the pipeline at the free end thereof is made by depositing a weld bead (30).

9. The method according to any one of claims 1 to 8, wherein the first and second locking wedges are made of polymer.

10. The method according to any one of claims 1 to 9, wherein positioning the outer pipe (10') of the new pipeline element alongside the outer pipe (10) of the pipeline is made by means of a centering tooling (26).
